# EUROPEAN PATENT SPECIFICATION

(11) **EP 4 503 692 B1**
(45) Date of publication and mention of the grant of the patent: **08.04.2026**
(21) Application number: 23799654.1
(22) Date of filing: 02.05.2023
(51) Int. Cl.: H04W 12/06, H04L 9/40, H04W 76/10, H04W 76/20

(54) **METHOD AND DEVICE FOR SUPPORTING AUTHENTICATION OF TERMINAL IN WIRELESS COMMUNICATION SYSTEM**
VERFAHREN UND VORRICHTUNG ZUR UNTERSTÜTZUNG DER AUTHENTIFIZIERUNG EINES ENDGERÄTS IN EINEM DRAHTLOSKOMMUNIKATIONSSYSTEM
PROCÉDÉ ET DISPOSITIF DE PRISE EN CHARGE D'AUTHENTIFICATION DE TERMINAL DANS UN SYSTÈME DE COMMUNICATION SANS FIL

(30) Priority: 02.05.2022 KR 20220054347
(43) Date of publication of application: 05.02.2025
(73) Proprietor: Samsung Electronics Co., Ltd., Suwon-si, Gyeonggi-do 16677 (KR)
(72) Inventor: SUH, Kyungjoo, Suwon-si Gyeonggi-do 16677 (KR)
(74) Representative: Gulde & Partner
(86) International application number: PCT/KR2023/005983
(87) International publication number: WO 2023/214773

(56) References cited:
- WO-A1-2021/096193
- WO-A1-2021/114066
- US-A1- 2019 364 463
- INTERDIGITAL: "TR 33.847 Update for solution #25", vol. SA WG3, no. e-meeting; 20210517 - 20210528, 9 May 2021 (2021-05-09), XP052003679, Retrieved from the Internet <URL:https://ftp.3gpp.org/tsg_sa/WG3_Security/TSGS3_103e/Docs/S3-211486.zip S3-211486 - TR 33.847 sol#25 evaluation.doc> [retrieved on 20210509]
- LG ELECTRONICS: "Solution for secondary authentication in relay communication", vol. SA WG3, no. e-meeting; 20201109 - 20201120, 29 October 2020 (2020-10-29), XP051948550, Retrieved from the Internet <URL:https://ftp.3gpp.org/tsg_sa/WG3_Security/TSGS3_101e/Docs/S3-202865.zip S3-202865_Solution for secondary authentication in relay communication.doc> [retrieved on 20201029]
- INTERDIGITAL: "Solution for secondary authentication Remote UE with L3 UE-to-Network relay", 3GPP DRAFT; S3-210124, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20210118 - 20210129, 10 January 2021 (2021-01-10), Mobile Competence Centre ; 650, route des Lucioles ; F-06921 Sophia-Antipolis Cedex ; France , XP051967919
- "3rd Generation Partnership Project; Technical Specification Group Services and System Aspects; Procedures for the 5G System (5GS); Stage 2 (Release 17)", 3GPP STANDARD; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V17.4.0, 23 March 2022 (2022-03-23), Mobile Competence Centre ; 650, route des Lucioles ; F-06921 Sophia-Antipolis Cedex ; France, pages 1 - 738, XP052144761

## Description

### [Technical Field]

The disclosure relates to a device and method for providing security in a wireless communication system. Specifically, the disclosure relates to a method and device for providing security upon session processing of a UE.

### [Background Art]

5G mobile communication technology defines a wide frequency band to enable fast transmission speed and new services and may be implemented in frequencies below 6GHz ('sub 6GHz'), such as 3.5 GHz, as well as in ultra-high frequency bands ('above 6GHz'), such as 28GHz and 39GHz called millimeter wave (mmWave). Further, 6G mobile communication technology, which is called a beyond 5G system, is considered to be implemented in terahertz bands (e.g., 95GHz to 3 THz) to achieve a transmission speed 50 times faster than 5G mobile communication technology and ultra-low latency reduced by 1/10.

In the early stage of 5G mobile communication technology, standardization was conducted on beamforming and massive MIMO for mitigating propagation pathloss and increasing propagation distance in ultrahigh frequency bands, support for various numerologies for efficient use of ultrahigh frequency resources (e.g., operation of multiple subcarrier gaps), dynamic operation of slot format, initial access technology for supporting multi-beam transmission and broadband, definition and operation of bandwidth part (BWP), new channel coding, such as low density parity check (LDPC) code for massive data transmission and polar code for high-reliable transmission of control information, L2 pre-processing, and network slicing for providing a dedicated network specified for a specific service, so as to meet performance requirements and support services for enhanced mobile broadband (eMBB), ultra-reliable low-latency communications (URLLC), and massive machine-type communications (mMTC).

Currently, improvement and performance enhancement in the initial 5G mobile communication technology is being discussed considering the services that 5G mobile communication technology has intended to support, and physical layer standardization is underway for technology, such as vehicle-to-everything (V2X) for increasing user convenience and assisting autonomous vehicles in driving decisions based on the position and state information transmitted from the VoNR, new radio unlicensed (NR-U) aiming at the system operation matching various regulatory requirements, NR UE power saving, non-terrestrial network (NTN) which is direct communication between UE and satellite to secure coverage in areas where communications with a terrestrial network is impossible, and positioning technology.

Also being standardized are radio interface architecture/protocols for technology of industrial Internet of things (IIoT) for supporting new services through association and fusion with other industries, integrated access and backhaul (IAB) for providing nodes for extending the network service area by supporting an access link with the radio backhaul link, mobility enhancement including conditional handover and dual active protocol stack (DAPS) handover, 2-step random access (RACH for NR) to simplify the random access process, as well as system architecture/service fields for 5G baseline architecture (e.g., service based architecture or service based interface) for combining network functions virtualization (NFV) and software-defined networking (SDN) technology and mobile edge computing (MEC) for receiving services based on the position of the UE.

As 5G mobile communication systems are commercialized, soaring connected devices would be connected to communication networks so that reinforcement of the function and performance of the 5G mobile communication system and integrated operation of connected devices are expected to be needed. To that end, new research is to be conducted on, e.g., extended reality (XR) for efficiently supporting, e.g., augmented reality (AR), virtual reality (VR), and mixed reality (MR), and 5G performance enhancement and complexity reduction using artificial intelligence (AI) and machine learning (ML), support for AI services, support for metaverse services, and drone communications.

Further, development of such 5G mobile communication systems may be a basis for multi-antenna transmission technology, such as new waveform for ensuring coverage in 6G mobile communication terahertz bands, full dimensional MIMO (FD-MIMO), array antenna, and large scale antenna, full duplex technology for enhancing the system network and frequency efficiency of 6G mobile communication technology as well as reconfigurable intelligent surface (RIS), high-dimensional space multiplexing using orbital angular momentum (OAM), metamaterial-based lens and antennas to enhance the coverage of terahertz band signals, AI-based communication technology for realizing system optimization by embedding end-to-end AI supporting function and using satellite and artificial intelligence (AI) from the step of design, and next-generation distributed computing technology for implementing services with complexity beyond the limit of the UE operation capability by way of ultrahigh performance communication and computing resources.

The disclosure relates to a device and method for providing security to a wireless communication system. Specifically, the disclosure relates to a processing method and device for providing security for session processing of a UE. INTERDIGITAL: "TR 33.847 Update for solution #25", 3GPP DRAFT; S3-211486, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20210517 - 20210528 9 May 2021 (2021-05-09), discloses PDU Session secondary A&A of Remote UE via L3 UE-to-Network relay. LG ELECTRONICS: "Solution for secondary authentication in relay communication", 3GPP DRAFT; S3-202865, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. e-meeting; 20201109 - 20201120 29 October 2020 (2020-10-29), provides a solution for secondary authentication in relay communication.

### [Detailed Description of the Invention]

### [Technical Problem]

The disclosure relates to a device and method for providing security in a wireless communication system. Specifically, the disclosure relates to a method and device for providing security upon session processing of a UE.

### [Technical Solution]

The invention is set out in the appended set of claims. According to an aspect of the disclosure, a method for supporting authentication of a second user equipment (UE) by a first UE in a wireless communication system may comprise transmitting a PDU session establishment message for a PDU session for the first UE to a session management function (SMF), receiving a PDU session establishment response message corresponding to the PDU session establishment message from the SMF, transmitting a PDU session modification message including an authentication information request for the second UE to the SMF, and receiving a PDU session modification response message including authentication information for the second UE from the SMF.

According to an aspect, the authentication information for the second UE may be implemented as any one of an EAP authentication message for performing authentication, an EAP authentication request message, an EAP success message, and an EAP failure message.

According to an aspect, the method for supporting authentication of the second UE by the first UE may further comprise storing the authentication information for the second UE included in the PDU session modification response message.

According to an aspect, the method for supporting authentication of the second UE by the first UE may further comprise transmitting a first message indicating the authentication for the second UE is completed to the second UE, and receiving a second message which is a response to the first message from the second UE.

According to an embodiment, the method for supporting authentication of the second UE by the first UE may further comprise receiving, from the second UE, a security request message for the second UE to be authenticated through the first UE in a communication network, and transmitting a response message to the security request message to the second UE.

According to an aspect of the disclosure, a method for supporting authentication of a second user equipment (UE) by a session management function (SMF) in a wireless communication system may comprise receiving a PDU session establishment message for a PDU session for a first UE from the first UE, transmitting a PDU session establishment response message corresponding to the PDU session establishment message to the first UE, receiving a PDU session modification message including an authentication information request for the second UE from the first UE, and transmitting a PDU session modification response message including authentication information for the second UE to the first UE.

According to an aspect, the authentication information for the second UE may be implemented as any one of an EAP authentication message for performing authentication, an EAP authentication request message, an EAP success message, and an EAP failure message.

According to an aspect, the method for supporting authentication of the second UE by the SMF may further comprise transmitting an authentication request message for requesting authentication of the second UE to an authentication, authorization, and accounting (AAA) based on the PDU session modification message, and receiving an authentication response message corresponding to the authentication request message from the AAA.

According to an aspect, the method for supporting authentication of the second UE by the SMF may further comprise transmitting a security request message for requesting authentication of the first UE to an authentication, authorization, and accounting (AAA) based on the PDU session establishment message, and receiving a security response message corresponding to the security request message from the AAA.

According to an aspect of the disclosure, a first UE supporting authentication of a second user equipment (UE) in a wireless communication system comprises a transceiver and a processor. A processor may control to transmit a PDU session establishment message for a PDU session for the first UE to a session management function (SMF), receive a PDU session establishment response message corresponding to the PDU session establishment message from the SMF, transmit a PDU session modification message including an authentication information request for the second UE to the SMF, and receive a PDU session modification response message including authentication information for the second UE from the SMF.

According to an aspect of the disclosure, a session management function (SMF) supporting authentication of a second user equipment (UE) in a wireless communication system comprises a transceiver and a processor. A processor may control to receive a PDU session establishment message for a PDU session for a first UE from the first UE, transmit a PDU session establishment response message corresponding to the PDU session establishment message to the first UE, receive a PDU session modification message including an authentication information request for the second UE from the first UE, and transmit a PDU session modification response message including authentication information for the second UE to the first UE.

### [Advantageous Effects]

According to an embodiment of the disclosure, it is possible to efficiently support a security solution in a wireless communication system.

### [Brief Description of the Drawings]

FIG. 1 illustrates an embodiment of a UE and a network environment for performing communication in which a security function is provided in a 5G network according to an embodiment of the disclosure;
FIG. 2 is a flowchart illustrating a procedure for performing communication in which a security function is provided in a 5G network according to an embodiment of the disclosure;
FIG. 3 is a flowchart illustrating a procedure for performing communication in which a security function is provided in a 5G network according to an embodiment of the disclosure;
FIG. 4 is a flowchart illustrating a procedure for performing communication in which a security function is provided in a 5G network according to an embodiment of the disclosure;
FIG. 5 is a view illustrating a configuration of a UE according to an embodiment; and
FIG. 6 is a view illustrating a configuration of a network entity according to an embodiment.

### [Mode for Carrying out the Invention]

Hereinafter, embodiments of the disclosure are described in detail with reference to the accompanying drawings. In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited to the terms, and the terms may be replaced with other terms denoting objects with equivalent technical meanings.

For ease of description, the terms and names defined in the 3rd generation partnership project long term evolution (3GPP LTE) standards, or terms and names modified based thereupon may be used herein. However, the disclosure is not limited by such terms and names and may be likewise applicable to systems conforming to other standards. In the disclosure, eNB may be used interchangeably with gNB for convenience of description. In other words, the base station described as an eNB may represent a gNB. The term UE herein may refer to mobile phones, NB-IoT devices, sensors, as well as other wireless communication devices.

The description of embodiments of the disclosure focuses primarily on 3GPP communication standards, but the subject matter of the disclosure may also be applicable to other communication systems with a similar technical background with minor changes without significantly departing from the scope of the present invention, and this may be so performed by the determination of those skilled in the art to which the disclosure pertains.

In 5G or NR systems, the access and mobility management function (AMF) which is a manager entity for managing the mobility of the UE and the session management function (SMF) which is an entity for managing the session are separated. Accordingly, unlike in the 4G LTE communication system, where the mobility management entity (MME) performs both mobility management and session management, in the 5G or NR system, an entity performing mobility management and an entity performing session management are separated, so that the communication method and communication management method between the UE and the network entity have been changed.

For non 3GPP access in the 5G or NR system, mobility management and session management, respectively, may be performed through the AMF and the SMF, via the non-3GPP inter-working function (N3IWF). Further, the AMF may also process security-related information which is a critical factor in mobility management.

As described above, in the 4G LTE system, the MME is in charge of mobility management and session management. The 5G or NR system may support a non-standalone architecture that performs communication using the network entities of the 4G LTE system together.

Communication may be performed using a V2X in 5G NR, and a UE in prose communication, as a relay. Meanwhile, in communication using a UE as a relay, a remote UE should be able to perform communication using the relay UE in addition to security based on mutual reliability between UEs. Further, the remote UE should be able to receive secure authentication using the relay UE.

The disclosure is to provide security of communication of a remote UE through a relay UE when performing V2X or prose communication in a wireless communication network. The above-described issues may be addressed through the security providing method. It is also possible to enhance network communication performance through making protocol efficient and may efficiently perform communication.

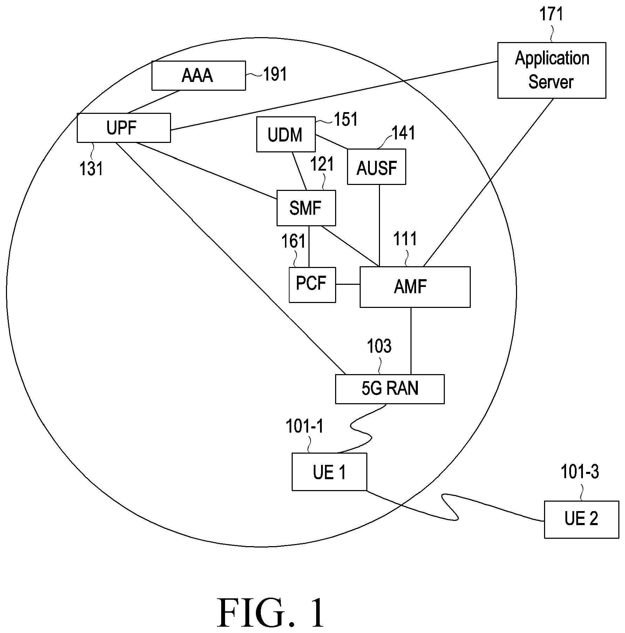

FIG. 1 illustrates an embodiment of a UE and a network environment in a 5G network according to an embodiment of the disclosure.

Referring to FIG. 1, a 5G or NR core network may include network functions (NFs) such as a user plane function (UPF) 131, a session management function (SMF) 121, an access and mobility management function (AMF) 111, a 5G radio access network (RAN) 103, a user data management (UDM) 151, and a policy control function (PCF) 161. The UPF 131 and/or the AMF 111 may communicate with an application server 171.

Further, for authenticating the entities, the 5G or NR core network may include entities such as the authentication server function (AUSF) 141 and the authentication, authorization, and accounting (AAA) 171. The user equipments (UEs, or terminals) 101-1 and 101-3 may connect to the 5G core network through a base station (BS, or 5G radio access network (RAN)) 103.

Meanwhile, when the N3 interworking function (N3IWF) exists for the case where the UE communicates through non 3GPP access, and the UE communicates through non 3GPP access, session management may be controlled by the UE, non 3GPP access, N3IWF, and SMF, and mobility management may be controlled by the UE, non 3GPP access, N3IWF, and AMF.

In the 5G or NR system, the entities performing mobility management and session management are separated into the AMF 111 and the SMF 121. Meanwhile, the 5G or NR system is considering a standalone deployment structure that communicates only with 5G or NR entities and a non-standalone deployment structure that uses 4G entities and 5G or NR entities together.

In FIG. 1, when the UE communicates with the network, such a deployment may be possible in which control is performed by the eNB, and the 5G entity of the core network is used. In this case, mobility management between the UE and the AMF and session management between the UE and the SMF may be performed in a non-access stratum (NAS) layer which is layer 3.

The communication network on which the disclosure is based assumes a 5G or 4G LTE network. However, the same concept may also be applied to other systems within the category which may be understood by one of ordinary skill in the art.

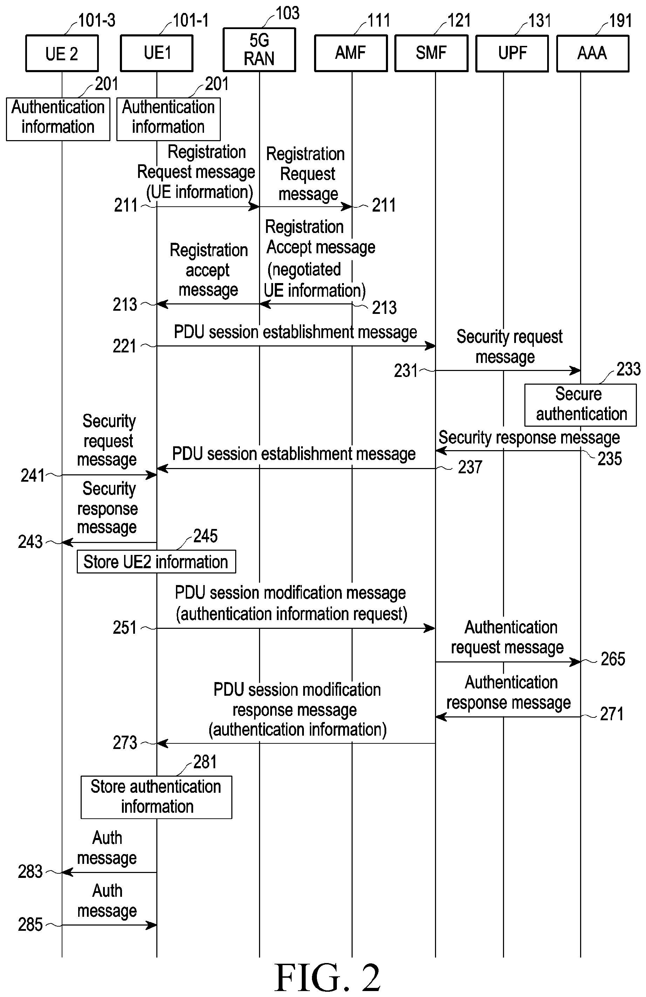

FIG. 2 is a flowchart illustrating a procedure for performing communication in which a security function is provided in a 5G network according to an embodiment of the disclosure.

Referring to FIG. 2, a wireless communication system may include a UE1 101-1, a UE2 101-3, a 5G RAN 103, an AMF 111, an SMF 121, a UPF 131, and an AAA 191.

According to an embodiment, the UE2 101-3 may be additionally authenticated based on security between the UE1 101-1 and the UE2 101-3, and authentication between the UE1 101-1 and the AAA 191.

According to an embodiment, the UE1 101-1 may authenticate the session to be established by the UE2 101-3 using information about the previously established session.

According to an embodiment, the UE2 101-3 may be authenticated using the PDU session establishment of the UE1 101-1, i.e., while modifying the PDU session established by the UE1 101-1.

According to an embodiment, the authentication process and the process of modifying a PDU session may be performed simultaneously. According to an embodiment, in order to reduce the time required for the authentication process, authentication of the UE 2 101-3 may be additionally performed through a PDU session modification process using previously established security and authentication.

In step 201, the UE1 101-1 and the UE2 101-3 may retain authentication information for a mutual authentication process. According to an embodiment, the UE1 101-1 and the UE2 101-3 may perform mutual authentication with pre-configured information, or the UE1 101-1 and the UE2 101-3 may perform mutual authentication with each other through device-to-device communication.

In step 211, the UE1 101-1 may transmit a registration request message to the AMF 111. According to an embodiment, the UE1 101-1 may inform the AMF 111 that the UE1 101-1 may serve as a relay node.

In step 213, the AMF 111 may transmit a registration accept message to the UE1 101-1. According to an embodiment, the AMF 111 may transmit, to the UE1 101-1, information about a negotiated UE, e.g., a UE as a relay, as a function of the UE.

In step 221, the UE1 101-1 may transmit a PDU session establishment message to the SMF 121 via the AMF 111.

In step 231, the SMF 121 may transmit a security request message (or a message requesting authentication) to the AAA 191.

In step 233, the AAA 191 may perform authentication on the UE1 101-1.

In step 235, the AAA 191 may transmit a response message to authentication of the UE1 101-1 to the SMF 121.

In step 237, the SMF 121 may transmit a PDU session establishment message to the UE1 101-1 via the AMF 111.

In step 241, the UE2 101-3 may transmit a security request message to the UE1 101-1 to be authenticated in the communication network through the UE1 101-1.

In step 243, the UE1 101-1 may transmit a security response message, which is a response message to authentication, to the UE2 101-3.

In step 245, the UE1 101-1 may store at least one of authentication information about the UE2 101-3 and identity information about the UE2 101-3.

In step 251, the UE1 101-1 may transmit a PDU session modification message to the SMF 121 via the AMF 111 to perform authentication and establish a session for the UE2 101-3. According to an embodiment, an authentication information request message may be transmitted together with a PDU session modification message to perform authentication of the UE2 101-3 via the UE1 101-1. According to an embodiment, the authentication-related information may be transmitted together with the PDU session modification message.

According to an embodiment, various cases are possible for authentication information included in the PDU session modification message, as follows.

Case 1) In an embodiment, the authentication information may be authentication information for authentication.

Case 2) In an embodiment, the authentication information may be an EAP authentication message for performing authentication.

Case 3) In an embodiment, the authentication information may be an EAP authentication request message as authentication information requested by the UE from the network.

Case 4) In an embodiment, the message transferred from the network to the UE may be an EAP success message or an EAP failure message.

In step 265, the SMF 121 may transmit an authentication request message to the AAA 191.

In step 271, AAA 191 may transmit an authentication response message to the SMF 121.

In step 273, the SMF 121 may transmit a PDU session modification response message to the UE1 101-1. According to an embodiment, the PDU session modification response message may include an authentication response message. According to an embodiment, the PDU session modification response message may include authentication-related information.

In step 281, the UE1 101-1 may store at least one of the authentication information about the UE1 101-1 and the UE2 101-3, the authentication information about the UE2 101-3, and the pairing information about the authentication of the UE1 101-1 and the UE2 101-3 received from the AAA 191 via the SMF 121 and the AMF 111.

According to an embodiment, the authentication-related information stored in the UE1 101-1 serving as a relay may be at least one of the identity of the UE2 101-3, authentication, security information required to mutually authenticate the UE2 101-3 and the UE1 101-1 (e.g., group key information about the group where the UE2 101-3 and the UE1 101-1 belong), and authentication information about the UE2 101-3 and UE1 101-1 after authentication of the UE2 101-3 by the AAA 191 via the UE1 101-1.

In step 283, the UE1 informs the UE2 that authentication has been completed.

In step 285, the UE2 sends a response message to the UE1 for authentication completion.

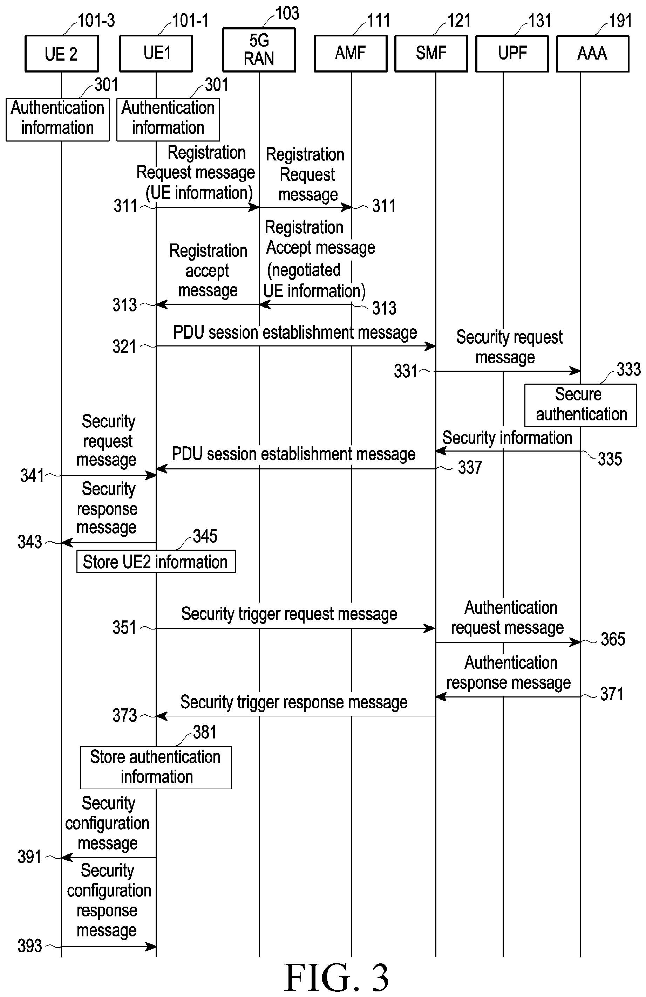

FIG. 3 is a flowchart illustrating a procedure for performing communication in which a security function is provided in a 5G network according to another embodiment of the disclosure.

Referring to FIG. 3, the wireless communication system may include a UE1 101-1, a UE2 101-3, a 5G RAN 103, an AMF 111, an SMF 121, a UPF 131, and an AAA 191.

According to an embodiment, the UE2 101-3 may be additionally authenticated based on security between the UE1 101-1 and the UE2 101-3, and authentication of the UE1 101-1 and AAA 191.

In FIG. 3, the UE2 101-3-UE1 101-1 section may be subjected to security and authentication in a device-to-device manner, and the UE1 101-1-AAA 191 section may be subjected to security and authentication, so that authentication of the UE2 101-3 may be performed through per-section authentication.

In step 301, the UE1 101-1 and the UE2 101-3 may retain authentication information for a mutual authentication process. According to an embodiment, the UE1 101-1 and the UE2 101-3 may perform mutual authentication based on pre-configured information, or the UE1 101-1 and the UE2 101-3 may perform mutual authentication through device-to-device communication.

In step 311, the UE1 101-1 may transmit a registration request message including UE information (UE info) to the 5G RAN 103, and the 5G RAN 103 may transmit a registration request message to the AMF 111. According to an embodiment, the UE1 101-1 may notify the AMF 111 through the 5G RAN 103 that the UE1 101-1 may serve as a relay node.

In step 313, the AMF 111 may transmit a registration accept message including negotiated UE info to the 5G RAN 103, and the 5G RAN 103 may transmit a registration accept message to the UE1 101-1.

In step 321, the UE1 101-1 may transmit a PDU session establishment message to the SMF 121 via the AMF 111.

In step 331, the SMF 121 may transmit a security request message (or a message requesting authentication) to the AAA 191.

In step 333, the AAA 191 may perform authentication on the UE1 101-1.

In step 335, the AAA 191 may transmit a response message to authentication of the UE1 101-1 to the SMF 121.

In step 337, the SMF 121 may transmit a PDU session establishment message to the UE1 101-1 via the AMF 111.

In step 341, the UE2 101-3 may transmit a security request message to the UE1 101-1 to be authenticated in the communication network through the UE1 101-1.

In step 343, the UE1 101-1 may transmit a security response message, which is a response message to authentication, to the UE2 101-3.

In step 345, the UE1 101-1 may store at least one of authentication information about the UE2 101-3 and identity information about the UE2 101-3.

In step 351, the UE1 101-1 may transmit a security triggering message to the SMF 121 via the AMF 111 to perform authentication on the UE2 101-3. According to an embodiment, to perform authentication of the UE2 101-3 via the UE1 101-1, information about the UE2 101-3 may be transmitted together with the security triggering message.

According to an embodiment, various embodiments are possible for the authentication information included in the security triggering or authentication triggering message, as follows.

Case 1) In an embodiment, the authentication information may be authentication information for authentication.

Case 2) In an embodiment, the authentication information may be an EAP authentication message for performing authentication.

Case 3) In an embodiment, the authentication information may be an EAP authentication request message as authentication information requested by the UE from the network.

Case 4) In an embodiment, the message transferred from the network to the UE may be an EAP success message or an EAP failure message.

In step 365, the SMF 121 may transmit an authentication request message to the AAA 191.

In step 371, AAA 191 may transmit an authentication response message to the SMF 121.

In step 373, the SMF 121 may transmit a security triggering response message to the UE1 101-1. According to an embodiment, the security triggering response message may include authentication-related information.

In step 381, the UE1 101-1 may store at least one of the authentication information about the UE1 101-1 and the UE2 101-3, the authentication information about the UE2 101-3, and the pairing information about the authentication of the UE1 101-1 and the UE2 101-3 received from the AAA 191 via the SMF 121 and the AMF 111.

According to an embodiment, the authentication-related information stored in the UE1 101-1 serving as a relay may be at least one of the identity of the UE2 101-3, authentication, security information required to mutually authenticate the UE2 101-3 and the UE1 101-1 (e.g., group key information about the group where the UE2 101-3 and the UE1 101-1 belong), and authentication information about the UE2 101-3 and UE1 101-1 after authentication of the UE2 101-3 by the AAA 191 via the UE1 101-1.

In step 391, the UE1 101-1 may transmit an authentication configuration message to the UE2 101-3, completing authentication.

In step 385, the UE2 101-3 may transmit an authentication configuration response message to the UE1 101-1.

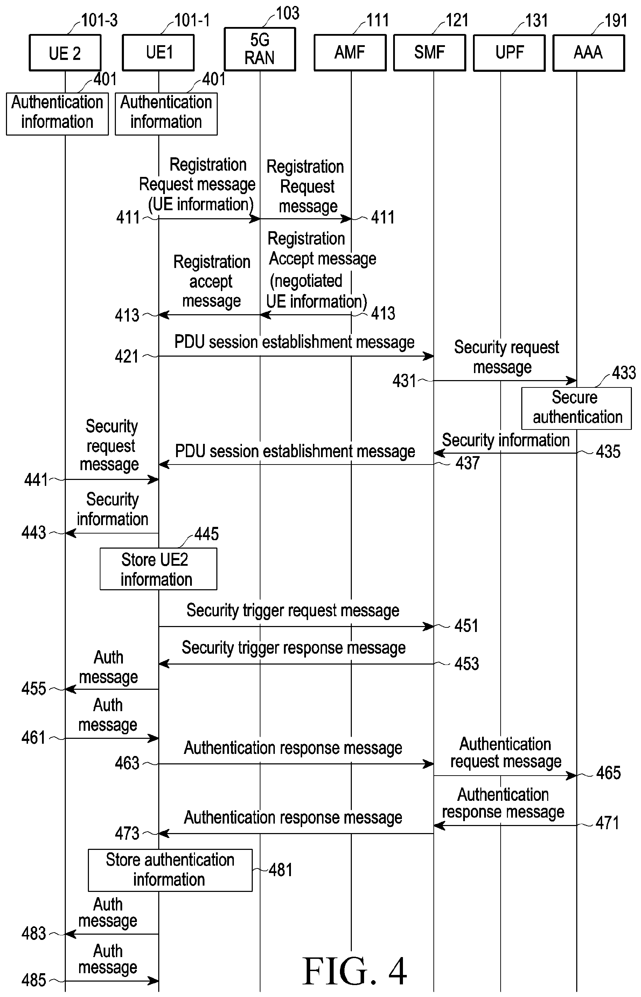

FIG. 4 is a flowchart illustrating a procedure for performing communication in which a security function is provided in a 5G network according to another embodiment of the disclosure.

Referring to FIG. 4, a wireless communication system may include a UE1 101-1, a UE2 101-3, a 5G RAN 103, an AMF 111, an SMF 121, a UPF 131, and an AAA 191.

According to an embodiment, the UE2 101-3 may be additionally authenticated based on security between the UE1 101-1 and the UE2 101-3, and authentication of the UE1 101-1 and AAA 191.

According to an embodiment, various cases are possible for authentication information, as follows.

Case 1) In an embodiment, the authentication information may be authentication information for authentication.

Case 2) In an embodiment, the authentication information may be an EAP authentication message for performing authentication.

Case 3) In an embodiment, the authentication information may be an EAP authentication request message as authentication information requested by the UE from the network.

Case 4) In an embodiment, the message transferred from the network to the UE may be an EAP success message or an EAP failure message.

In FIG. 4, the UE2 101-3 may perform authentication through the UE1 101-1 and AAA 191, and authentication may be performed from the UE2 101-3 to the AAA 191.

In step 401, the UE1 101-1 and the UE2 101-3 may retain authentication information for a mutual authentication process. According to an embodiment, the UE1 101-1 and the UE2 101-3 may perform mutual authentication with pre-configured information, or the UE1 101-1 and the UE2 101-3 may perform mutual authentication with each other through device-to-device communication.

In step 411, the UE1 101-1 may transmit a registration request message including UE information (UE info) to the 5G RAN 103, and the 5G RAN 103 may transmit a registration request message to the AMF 111. According to an embodiment, the UE1 101-1 may inform the AMF 111 that the UE1 101-1 may serve as a relay node.

In step 413, the AMF 111 may transmit a registration accept message to the UE1 101-1. According to an embodiment, the AMF 111 may transmit information about the negotiated UE, to the UE1 101-1, together with the registration accept message, as a function of the UE.

In step 421, the UE1 101-1 may transmit a PDU session establishment message to the SMF 121 via the AMF 111.

In step 431, the SMF 121 may transmit a security request message (or a message requesting authentication) to the AAA 191.

In step 433, the AAA 191 may perform authentication on the UE1 101-1.

In step 435, the AAA 191 may transmit a response message to authentication of the UE1 101-1.

In step 437, the SMF 121 may transmit a PDU session establishment message to the UE1 101-1 via the AMF 111.

In step 441, the UE2 101-3 may transmit a security request message to the UE1 101-1 to be authenticated in the communication network through the UE1 101-1.

In step 443, the UE1 101-1 may transmit a security response message, which is a response message to authentication, to the UE2 101-3.

In step 445, the UE1 101-1 may store at least one of authentication information about the UE2 101-3 and identity information about the UE2 101-3.

In step 451, the UE1 101-1 may transmit a security trigger request message to the SMF 121 via the AMF 111 to perform authentication on the UE2 101-3.

According to an embodiment, various cases are possible for authentication information included in the security trigger request message, as follows.

Case 1) In an embodiment, it may be authentication information for authentication.

Case 2) In another embodiment, it may be an EAP authentication message for performing authentication.

Case 3) In another embodiment, it may be an EAP authentication request message as authentication information requested by the UE from the network.

In step 453, the SMF 121 may transmit an authentication command message to the UE1 101-1.

According to an embodiment, various cases are possible for authentication information included in the authentication command message, as follows.

Case 1) In an embodiment, it may be authentication information for authentication.

Case 2) In another embodiment, it may be an EAP authentication message for performing authentication.

Case 4) In another embodiment, the message transferred from the network to the UE may be an EAP success message or an EAP failure message.

Case 5) or in another embodiment, an EAP authentication request message may be transferred from the network to the UE, so that authentication may be performed from the network. In this case, triggering for authentication is performed by the UE1 101-1 on behalf of the UE2 101-3, but the network may determine that the entire authentication procedure from the UE1 101-1 to the UE2 101-3 and AAA 191 may be performed.

According to an embodiment, authentication is performed to the SMF 121, the UE1 101-1, the UE2 101-3, and the AAA 191 by performing the process of steps 453-455-461-463-465-471-473 and, in such a case, the SMF 121 and the UE1 101-1 may serve as intermediate anchors in performing authentication.

In step 455, the UE1 101-1 may transmit an authentication request message to the UE2 101-3.

According to an embodiment, the authentication request message may be an EAP authentication message for performing authentication.

In step 461, the UE2 101-3 may transmit an authentication response message to the UE2 101-3.

In step 463, the UE1 101-1 may transmit an authentication response message to the SMF 121.

In step 465, the SMF 121 may transmit an authentication request message to the AAA 191.

In step 471, AAA 191 may transmit an authentication response message to the SMF 121.

In step 473, the SMF 121 may transmit an authentication response message to the UE1 101-1. According to an embodiment, the authentication response message may include authentication-related information.

According to an embodiment, various cases are possible for authentication information included in the authentication response message, as follows.

Case 1) In an embodiment, it may be authentication information for authentication.

Case 2) In another embodiment, it may be an EAP authentication message for performing authentication.

Case 4) In another embodiment, the message transferred from the network to the UE may be an EAP success message or an EAP failure message.

In step 481, the UE1 101-1 may store at least one of the authentication information about the UE1 101-1 and the UE2 101-3, the authentication information about the UE2 101-3, and the pairing information about the authentication of the UE1 101-1 and the UE2 101-3 received from the AAA 191 via the SMF 121 and the AMF 111.

According to an embodiment, the authentication-related information stored in the UE1 101-1 serving as a relay may be at least one of the identity of the UE2 101-3, authentication, security information required to mutually authenticate the UE2 101-3 and the UE1 101-1 (e.g., group key information about the group where the UE2 101-3 and the UE1 101-1 belong), and authentication information about the UE2 101-3 and UE1 101-1 after authentication of the UE2 101-3 by the AAA 191 via the UE1 101-1.

In step 483, the UE1 101-1 may notify the UE2 101-3 that authentication has been completed. According to an embodiment, the message transferred from the network to the UE may be an EAP success message or an EAP failure message.

In step 485, the UE2 101-3 may transmit a response message for authentication completion to the UE1 101-1.

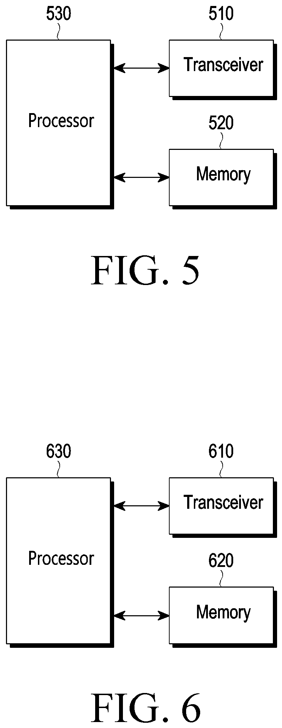

FIG. 5 is a view illustrating a configuration of a UE according to an embodiment.

As shown in FIG. 5, a UE of the disclosure may include a transceiver 510, memory 520, and a processor 530. The processor 530, transceiver 510, and memory 520 of the UE may operate according to the above-described communication methods by the UE. However, the components of the UE are not limited thereto. For example, the UE may include more or fewer components than the above-described components. The processor 530, the transceiver 510, and the memory 520 may be implemented in the form of a single chip.

The transceiver 510 collectively refers to the transmitter of the UE and the receiver of the UE and may transmit and receive signals to/from the base station or network entity. The signals transmitted/received with the base station may include control information and data. To that end, the transceiver 510 may include a radio frequency (RF) transmitter for frequency-up converting and amplifying signals transmitted and an RF receiver for low-noise amplifying signals received and frequency-down converting the frequency of the received signals. However, this is merely an example of the transceiver 510, and the components of the transceiver 510 are not limited to the RF transmitter and the RF receiver.

Further, the transceiver 510 may include a wired/wireless transceiver and may include various components for transmitting/receiving signals.

The transceiver 510 may receive signals via a radio channel, output the signals to the processor 530, and transmit signals output from the processor 530 via a radio channel.

Further, the transceiver 510 may receive the communication signal and output it to the processor and transmit the signal output from the processor to the network entity through the wired/wireless network.

The memory 520 may store programs and data necessary for the operation of the UE. The memory 520 may store control information or data that is included in the signal obtained by the UE. The memory 520 may include a storage medium, such as ROM, RAM, hard disk, CD-ROM, and DVD, or a combination of storage media.

The processor 530 may control a series of processes for the UE to be able to operate according to the above-described embodiments. The processor 530 may include at least one processor. For example, the processor 530 may include a communication processor (CP) that performs control for communication and an application processor (AP) that controls an upper layer, such as an application program.

FIG. 6 is a view illustrating a configuration of a network entity according to an embodiment.

As shown in FIG. 6, a network entity of the disclosure may include a transceiver 610, memory 620, and a processor 630. The processor 630, transceiver 610, and memory 620 of the network entity may operate according to the above-described communication methods by the network entity. However, the components of the network entity are not limited thereto. For example, the network entity may include more or fewer components than the above-described components. The processor 630, the transceiver 610, and the memory 620 may be implemented in the form of a single chip. The network entity may include network functions (NFs), such as the access and mobility management function (AMF), session management function (SMF), policy and charging function (PCF), network exposure function (NEF), unified data management (UDM), and user plane function (UPF), as described above. The network entity may include a base station.

The transceiver 610 collectively refers to the receiver of the network entity and the transmitter of the network entity and may transmit and receive signals to/from a UE or another network entity. In this case, the signals transmitted/received with the base station may include control information and data. To that end, the transceiver 610 may include a radio frequency (RF) transmitter for frequency-up converting and amplifying signals transmitted and an RF receiver for low-noise amplifying signals received and frequency-down converting the frequency of the received signals. However, this is merely an example of the transceiver 610, and the components of the transceiver 610 are not limited to the RF transmitter and the RF receiver. The transceiver 610 may include a wired/wireless transceiver and may include various components for transmitting/receiving signals.

Further, the transceiver 610 may receive signals via a communication channel (e.g., a radio channel), output the signals to the processor 630, and transmit signals output from the processor 630 via a radio channel.

Further, the transceiver 610 may receive the communication signal and output it to the processor and transmit the signal output from the processor to the UE or network entity through the wired/wireless network.

The memory 620 may store programs and data necessary for the operation of the network entity. Further, the memory 620 may store control information or data that is included in the signal obtained by the network entity. The memory 620 may include a storage medium, such as ROM, RAM, hard disk, CD-ROM, and DVD, or a combination of storage media.

The processor 630 may control a series of processes for the network entity to be able to operate according to the above-described embodiments. The processor 630 may include at least one processor. The methods according to the embodiments described in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the claims.

## Claims

1. A method for supporting authentication of a second user equipment, UE, by a first UE in a wireless communication system, the method comprising:
transmitting, to a session management function, SMF, a PDU session establishment message for a PDU session for the first UE;
receiving, from the SMF, a PDU session establishment response message corresponding to the PDU session establishment message;
transmitting, to the SMF, a security trigger request message to request the authentication for the second UE; and
receiving, from the SMF, a security trigger response message including authentication information for the second UE, wherein the authentication information for the second UE includes group key information of a group to which the first UE and the second UE belong.

2. The method of claim 1, wherein the authentication information for the second UE further includes one of an EAP authentication message for performing authentication, an EAP authentication request message, an EAP success message, and an EAP failure message.

3. The method of claim 1, further comprising storing the authentication information for the second UE included in the security trigger response message.

4. The method of claim 3, further comprising:
transmitting, a first message indicating the authentication for the second UE is completed to the second UE; and
receiving a second message which is a response to the first message from the second UE.

5. The method of claim 1, further comprising:
receiving, from the second UE, a security request message for the second UE to be authenticated through the first UE in a communication network; and
transmitting a response message to the security request message to the second UE.

6. A method for supporting authentication of a second user equipment, UE, by a session management function, SMF, in a wireless communication system, the method comprising:
receiving, from a first UE, a PDU session establishment message for a PDU session for the first UE;
transmitting, to the first UE, a PDU session establishment response message corresponding to the PDU session establishment message;
receiving, from the first UE, a security trigger request message to request the authentication for the second UE; and
transmitting, to the first UE, a security trigger response message including authentication information for the second UE, wherein the authentication information for the second UE includes group key information of a group to which the first UE and the second UE belong.

7. The method of claim 6, wherein the authentication information for the second UE further includes one of an EAP authentication message for performing authentication, an EAP authentication request message, an EAP success message, and an EAP failure message.

8. The method of claim 6, further comprising:
transmitting an authentication request message for requesting authentication of the second UE to an authentication, authorization, and accounting, AAA, based on the security trigger request message; and
receiving an authentication response message corresponding to the authentication request message from the AAA.

9. The method of claim 6, further comprising:
transmitting a security request message for requesting authentication of the first UE to an authentication, authorization, and accounting, AAA, based on the PDU session establishment message; and
receiving a security response message corresponding to the security request message from the AAA.

10. A first UE supporting authentication of a second user equipment, UE, in a wireless communication system, comprising:
a transceiver (510); and
a processor (530) controlling to:
transmit, to a session management function, SMF, a PDU session establishment message for a PDU session for the first UE;
receive, from the SMF, a PDU session establishment response message corresponding to the PDU session establishment message;
transmit, to the SMF, a security trigger request message to request the authentication for the second UE, and
receive, from the SMF, a security trigger response message including authentication information for the second UE, wherein the authentication information for the second UE includes group key information of a group to which the first UE and the second UE belong.

11. The first UE of claim 10, wherein the authentication information for the second UE further includes one of an EAP authentication message for performing authentication, an EAP authentication request message, an EAP success message, and an EAP failure message.

12. The first UE of claim 10, wherein the processor (530) stores the authentication information for the second UE included in the security trigger response message.

13. The first UE of claim 12, wherein the processor controls to:
transmit a first message indicating the authentication for the second UE is completed to the second UE; and
receive a second message which is a response to the first message from the second UE.

14. A session management function, SMF, supporting authentication of a second user equipment, UE, in a wireless communication system, comprising:
a transceiver (610); and
a processor (630) controlling to:
receive, from a first UE, a PDU session establishment message for a PDU session for the first UE;
transmit, to the first UE, a PDU session establishment response message corresponding to the PDU session establishment message;
receive, from the first UE, a security trigger request message to request the authentication for the second UE, and
transmit, to the first UE, a security trigger response message including authentication information for the second UE, wherein the authentication information for the second UE includes group key information of a group to which the first UE and the second UE belong.

15. The SMF of claim 14, wherein the authentication information for the second UE further includes one of an EAP authentication message for performing authentication, an EAP authentication request message, an EAP success message, and an EAP failure message.

## Patentansprüche

1. Verfahren zum Unterstützen einer Authentifizierung eines zweiten Benutzergeräts, UE, durch ein erstes UE in einem drahtlosen Kommunikationssystem, wobei das Verfahren Folgendes umfasst:
Übertragen, an eine Sitzungsverwaltungsfunktion, SMF, einer PDU-Sitzungseinrichtungsnachricht für eine PDU-Sitzung für das erste UE;
Empfangen, von der SMF, einer PDU-Sitzungseinrichtungsantwortnachricht, die der PDU-Sitzungseinrichtungsnachricht entspricht;
Übertragen, an die SMF, einer Sicherheitsauslöser-Anforderungsnachricht, um die Authentifizierung für das zweite UE anzufordern; und
Empfangen, von der SMF, einer Sicherheitsauslöser-Antwortnachricht, die Authentifizierungsinformationen für das zweite UE enthält, wobei die Authentifizierungsinformationen für das zweite UE Gruppenschlüsselinformationen einer Gruppe beinhalten, zu der das erste UE und das zweite UE gehören.

2. Verfahren nach Anspruch 1, wobei die Authentifizierungsinformationen für das zweite UE ferner eine von einer EAP-Authentifizierungsnachricht zum Durchführen der Authentifizierung, einer EAP-Authentifizierungsanforderungsnachricht, einer EAP-Erfolgsnachricht und einer EAP-Fehlernachricht beinhalten.

3. Verfahren nach Anspruch 1, ferner umfassend Speichern der Authentifizierungsinformationen für das zweite UE, die in der Sicherheitsauslöser-Antwortnachricht enthalten sind.

4. Verfahren nach Anspruch 3, ferner umfassend:
Übertragen einer ersten Nachricht, die angibt, dass die Authentifizierung für das zweite UE abgeschlossen ist, an das zweite UE; und
Empfangen einer zweiten Nachricht, die eine Antwort auf die erste Nachricht ist, vom zweiten UE.

5. Verfahren nach Anspruch 1, ferner umfassend:
Empfangen, vom zweiten UE, einer Sicherheitsanforderungsnachricht für das zweite UE, um über das erste UE in einem Kommunikationsnetzwerk zu authentifizieren; und
Übertragen einer Antwortnachricht auf die Sicherheitsanforderungsnachricht an das zweite UE.

6. Verfahren zum Unterstützen einer Authentifizierung eines zweiten Benutzergeräts, UE, durch eine Sitzungsverwaltungsfunktion, SMF, in einem drahtlosen Kommunikationssystem, wobei das Verfahren Folgendes umfasst:
Empfangen, von einem ersten UE, einer PDU-Sitzungseinrichtungsnachricht für eine PDU-Sitzung für das erste UE;
Übertragen, an das erste UE, einer PDU-Sitzungseinrichtungsantwortnachricht, die der PDU-Sitzungseinrichtungsnachricht entspricht;
Empfangen, von dem ersten UE, einer Sicherheitsauslöser-Anforderungsnachricht, um die Authentifizierung für das zweite UE anzufordern; und
Übertragen, an das erste UE, einer Sicherheitsauslöser-Antwortnachricht, die Authentifizierungsinformationen für das zweite UE enthält, wobei die Authentifizierungsinformationen für das zweite UE Gruppenschlüsselinformationen einer Gruppe beinhalten, zu der das erste UE und das zweite UE gehören.

7. Verfahren nach Anspruch 6, wobei die Authentifizierungsinformationen für das zweite UE ferner eine von einer EAP-Authentifizierungsnachricht zum Durchführen der Authentifizierung, einer EAP-Authentifizierungsanforderungsnachricht, einer EAP-Erfolgsnachricht und einer EAP-Fehlernachricht beinhalten.

8. Verfahren nach Anspruch 6, ferner umfassend:
Übertragen einer Authentifizierungsanforderungsnachricht zum Anfordern der Authentifizierung des zweiten UE an eine Authentifizierungs-, Autorisierungs- und Abrechnungs-, AAA, -Instanz basierend auf der Sicherheitsauslöser-Anforderungsnachricht; und
Empfangen einer Authentifizierungsantwortnachricht, die der Authentifizierungsanforderungsnachricht entspricht, von der AAA-Instanz.

9. Verfahren nach Anspruch 6, ferner umfassend:
Übertragen einer Sicherheitsanforderungsnachricht zum Anfordern der Authentifizierung des ersten UE an eine Authentifizierungs-, Autorisierungs- und Abrechnungs-, AAA, -Instanz basierend auf der PDU-Sitzungseinrichtungsnachricht; und
Empfangen einer Sicherheitsantwortnachricht, die der Sicherheitsanforderungsnachricht entspricht, von der AAA-Instanz.

10. Erstes UE zum Unterstützen einer Authentifizierung eines zweiten Benutzergeräts, UE, in einem drahtlosen Kommunikationssystem, umfassend:
einen Transceiver (510); und
einen Prozessor (530), der Folgendes steuert:
Übertragen, an eine Sitzungsverwaltungsfunktion, SMF, einer PDU-Sitzungseinrichtungsnachricht für eine PDU-Sitzung für das erste UE;
Empfangen, von der SMF, einer PDU-Sitzungseinrichtungsantwortnachricht, die der PDU-Sitzungseinrichtungsnachricht entspricht;
Übertragen, an die SMF, einer Sicherheitsauslöser-Anforderungsnachricht, um die Authentifizierung für das zweite UE anzufordern, und
Empfangen, von der SMF, einer Sicherheitsauslöser-Antwortnachricht, die Authentifizierungsinformationen für das zweite UE enthält, wobei die Authentifizierungsinformationen für das zweite UE Gruppenschlüsselinformationen einer Gruppe beinhalten, zu der das erste UE und das zweite UE gehören.

11. Erstes UE nach Anspruch 10, wobei die Authentifizierungsinformationen für das zweite UE ferner eine von einer EAP-Authentifizierungsnachricht zum Durchführen der Authentifizierung, einer EAP-Authentifizierungsanforderungsnachricht, einer EAP-Erfolgsnachricht und einer EAP-Fehlernachricht beinhalten.

12. Erstes UE nach Anspruch 10, wobei der Prozessor (530) die Authentifizierungsinformationen für das zweite UE speichert, die in der Sicherheitsauslöser-Antwortnachricht enthalten sind.

13. Erstes UE nach Anspruch 12, wobei der Prozessor Folgendes steuert:
Übertragen einer ersten Nachricht, die angibt, dass die Authentifizierung für das zweite UE abgeschlossen ist, an das zweite UE; und
Empfangen einer zweiten Nachricht, die eine Antwort auf die erste Nachricht ist, vom zweiten UE.

14. Sitzungsverwaltungsfunktion, SMF, zum Unterstützen einer Authentifizierung eines zweiten Benutzergeräts, UE, in einem drahtlosen Kommunikationssystem, umfassend:
einen Transceiver (610); und
einen Prozessor (630), der Folgendes steuert:
Empfangen, von einem ersten UE, einer PDU-Sitzungseinrichtungsnachricht für eine PDU-Sitzung für das erste UE;
Übertragen, an das erste UE, einer PDU-Sitzungseinrichtungsantwortnachricht, die der PDU-Sitzungseinrichtungsnachricht entspricht;
Empfangen, von dem ersten UE, einer Sicherheitsauslöser-Anforderungsnachricht, um die Authentifizierung für das zweite UE anzufordern, und
Übertragen, an das erste UE, einer Sicherheitsauslöser-Antwortnachricht, die Authentifizierungsinformationen für das zweite UE enthält, wobei die Authentifizierungsinformationen für das zweite UE Gruppenschlüsselinformationen einer Gruppe beinhalten, zu der das erste UE und das zweite UE gehören.

15. SMF nach Anspruch 14, wobei die Authentifizierungsinformationen für das zweite UE ferner eine von einer EAP-Authentifizierungsnachricht zum Durchführen der Authentifizierung, einer EAP-Authentifizierungsanforderungsnachricht, einer EAP-Erfolgsnachricht und einer EAP-Fehlernachricht beinhalten.

## Revendications

1. Procédé pour prendre en charge l'authentification d'un deuxième équipement utilisateur, UE, par un premier UE dans un système de communication sans fil, le procédé comprenant :
transmettre, à une fonction de gestion de session, SMF, un message d'établissement de session PDU pour une session PDU pour le premier UE ;
recevoir, de la part de la SMF, un message de réponse d'établissement de session PDU correspondant au message d'établissement de session PDU ;
transmettre, à la SMF, un message de demande de déclenchement de sécurité afin de demander l'authentification pour le deuxième UE ; et
recevoir, depuis la SMF, un message de réponse de déclenchement de sécurité comprenant des informations d'authentification pour le deuxième UE, dans lequel les informations d'authentification pour le deuxième UE comprennent des informations de clé de groupe d'un groupe auquel appartiennent le premier UE et le deuxième UE.

2. Procédé de la revendication 1, dans lequel les informations d'authentification pour le deuxième UE comprennent en outre l'un d'un message d'authentification d'EAP pour effectuer l'authentification, d'un message de demande d'authentification d'EAP, d'un message de succès d'EAP et d'un message d'échec d'EAP.

3. Procédé de la revendication 1, comprenant en outre le stockage des informations d'authentification pour le deuxième UE incluses dans le message de réponse de déclenchement de sécurité.

4. Procédé de la revendication 3, comprenant en outre :
transmettre au deuxième UE un premier message indiquant que l'authentification du deuxième UE est terminée ; et
recevoir un deuxième message qui est une réponse au premier message en provenance du deuxième UE.

5. Procédé de la revendication 1, comprenant en outre :
recevoir, de la part du deuxième UE, un message de demande de sécurité pour le deuxième UE à authentifier par l'intermédiaire du premier UE dans un réseau de communication ; et
transmettre au deuxième UE un message de réponse au message de demande de sécurité.

6. Procédé pour prendre en charge l'authentification d'un deuxième équipement utilisateur, UE, par une fonction de gestion de session, SMF, dans un système de communication sans fil, le procédé comprenant :
recevoir, depuis un premier UE, un message d'établissement de session PDU pour une session PDU pour le premier UE ;
transmettre, au premier UE, un message de réponse d'établissement de session PDU correspondant au message d'établissement de session PDU ;
recevoir, de la part du premier UE, un message de demande de déclenchement de sécurité pour demander l'authentification du deuxième UE ; et
transmettre, au premier UE, un message de réponse de déclenchement de sécurité comprenant des informations d'authentification pour le deuxième UE, dans lequel les informations d'authentification pour le deuxième UE comprennent des informations de clé de groupe d'un groupe auquel appartiennent le premier UE et le deuxième UE.

7. Procédé de la revendication 6, dans lequel les informations d'authentification pour le deuxième UE comprennent en outre l'un d'un message d'authentification d'EAP pour effectuer l'authentification, d'un message de demande d'authentification d'EAP, d'un message de succès d'EAP et d'un message d'échec d'EAP.

8. Procédé de la revendication 6, comprenant en outre :
transmettre un message de demande d'authentification pour demander l'authentification du deuxième UE à un système d'authentification, d'autorisation et de comptabilité, AAA, en se basant sur le message de demande de déclenchement de sécurité ; et
recevoir un message de réponse d'authentification correspondant au message de demande d'authentification depuis l'AAA.

9. Procédé de la revendication 6, comprenant en outre :
transmettre un message de demande de sécurité pour demander l'authentification du premier UE à un système d'authentification, d'autorisation et de comptabilité, AAA, en se basant sur le message d'établissement de session PDU ; et
recevoir un message de réponse de sécurité correspondant au message de demande de sécurité depuis l'AAA.

10. Premier UE prenant en charge l'authentification d'un deuxième équipement utilisateur, UE, dans un système de communication sans fil, comprenant :
un émetteur-récepteur (510) ; et
un processeur (530) commandant de :
transmettre, à une fonction de gestion de session, SMF, un message d'établissement de session PDU pour une session PDU pour le premier UE ;
recevoir, de la part de la SMF, un message de réponse d'établissement de session PDU correspondant au message d'établissement de session PDU ;
transmettre, à la SMF, un message de demande de déclenchement de sécurité pour demander l'authentification pour le deuxième UE, et
recevoir, depuis la SMF, un message de réponse de déclenchement de sécurité comprenant des informations d'authentification pour le deuxième UE, dans lequel les informations d'authentification pour le deuxième UE comprennent des informations de clé de groupe d'un groupe auquel appartiennent le premier UE et le deuxième UE.

11. Premier UE de la revendication 10, dans lequel les informations d'authentification pour le deuxième UE comprennent en outre l'un d'un message d'authentification d'EAP pour effectuer l'authentification, d'un message de demande d'authentification d'EAP, d'un message de succès d'EAP et d'un message d'échec d'EAP.

12. Premier UE de la revendication 10, dans lequel le processeur (530) stocke les informations d'authentification pour le deuxième UE incluses dans le message de réponse de déclenchement de sécurité.

13. Premier UE de la revendication 12, dans lequel le processeur commande de :
transmettre au deuxième UE un premier message indiquant que l'authentification du deuxième UE est terminée ; et
recevoir un deuxième message qui est une réponse au premier message en provenance du deuxième UE.

14. Fonction de gestion de session, SMF, prenant en charge l'authentification d'un deuxième équipement utilisateur, UE, dans un système de communication sans fil, comprenant :
un émetteur-récepteur (610) ; et
un processeur (630) commandant de :
recevoir, depuis un premier UE, un message d'établissement de session PDU pour une session PDU pour le premier UE ;
transmettre, au premier UE, un message de réponse d'établissement de session PDU correspondant au message d'établissement de session PDU ;
recevoir, de la part du premier UE, un message de demande de déclenchement de sécurité pour demander l'authentification du deuxième UE ; et
transmettre, au premier UE, un message de réponse de déclenchement de sécurité comprenant des informations d'authentification pour le deuxième UE, dans lequel les informations d'authentification pour le deuxième UE comprennent des informations de clé de groupe d'un groupe auquel appartiennent le premier UE et le deuxième UE.

15. SMF de la revendication 14, dans lequel les informations d'authentification pour le deuxième UE comprennent en outre l'un d'un message d'authentification d'EAP pour effectuer l'authentification, d'un message de demande d'authentification d'EAP, d'un message de succès d'EAP et d'un message d'échec d'EAP.
